# EUROPEAN PATENT SPECIFICATION

(11) **EP 1 723 023 B1**
(45) Date of publication and mention of the grant of the patent: **23.07.2008**
(21) Application number: 05704691.4
(22) Date of filing: 11.01.2005
(51) Int. Cl.: B62D 1/10

(54) **A STEERING WHEEL ASSEMBLY**
LENKRADANORDNUNG
ENSEMBLE VOLANT DE DIRECTION

(30) Priority: 10.03.2004 GB 0405418
(43) Date of publication of application: 22.11.2006
(73) Proprietor: AUTOLIV DEVELOPMENT AB, 447 83 Vargarda (SE)
(72) Inventor: CHAPELAIN, Etienne, F-86440 Migne-Auxances (FR); CHEBRET, Romain, F-86170 Cisse (FR); GALMICHE, Fabrice, F-86000 Poitiers (FR); GROLEAU, Laurent, F-86190 Latille (FR); BERTRAND, Olivier, F-16240 Courcôme (FR)
(74) Representative: Parry, Simon James
(86) International application number: PCT/SE2005/000017
(87) International publication number: WO 2005/085036

(56) References cited:
- EP-A1- 0 414 245
- EP-A1- 1 199 243
- DE-A1- 2 131 902

## Description

**THE PRESENT INVENTION** relates to a steering wheel mounting.

It has been proposed previously to provide a steering-wheel unit for use in a motor vehicle. The steering-wheel is mounted to rotate relative to a fixed housing. The axis about which the steering-wheel rotates is offset from the axis of the steering column. The steering column carries a pinion gear. The steering-wheel carries a ring gear which meshes with part of the pinion gear. As the steering-wheel rotates, so the steering column is rotated.

In one embodiment of a steering-wheel of this type, it is possible to mount a central air-bag unit, with the air-bag unit remaining stationary while the steering-wheel rotates. This sort of arrangement enables a specially-shaped air-bag to be utilised and also facilitates the mounting of control buttons or the like on the upper surface of the air-bag unit.

DE 2131902 discloses a stearing wheel arrangement of this general type.

The present invention seeks to provide an improved steering-wheel mounting.

According to the present invention, there is provided a steering wheel arrangement, the steering arrangement incorporating a fixed element, the fixed element having an exterior side wall on which is mounted a ring bearing, the ring bearing engaging part of the frame of a steering wheel so that the steering wheel is rotatably mounted relative to the fixed element, the fixed element also having an opening defining a side wall, the opening receiving a second bearing to be mounted adjacent the side wall, the second bearing receiving a component to be connected to part of a steering column, so that the steering column may rotate relative to the fixed element, the said side walls being yieldable or deformable to facilitate the positioning of the bearings, wherein each side wall is made yieldable by the presence of an aperture provided in a surface which is orthogonal to the wall at a point adjacent the wall.

Preferably, the two bearings are substantially co-planar.

Conveniently, one said aperture is an arcuate aperture located at a point where the side wall of the opening is adjacent the exterior side wall.

Preferably, a further aperture is provided in a surface orthogonal to the side walls at a point where the side wall of the opening is spaced furthest from the side wall of the exterior of the element.

Advantageously, part of the steering wheel frame carries a ring gear and the said element which is to be connected to part of the steering column is a pinion gear engageable with the ring gear.

In order that the invention may be more readily understood, and so that further features thereof may be appreciated, an embodiment of the invention will now be described, by way of example, with reference to the accompanying drawings in which:
Fig. 1 is a perspective view of the steering wheel arrangement, parts of which are shown cut-away;
Fig. 2 is a sectional view illustrating part of the steering wheel mounting in more detail;
Fig. 3 is a further sectional view taken along the line III-III of Fig. 2;
Fig. 4 is a perspective view of a fixed element of a modified design;
Fig. 5 is a view of the element of Fig. 4 from the opposite side; and
Fig. 6 is a sectional view of the fixed element.

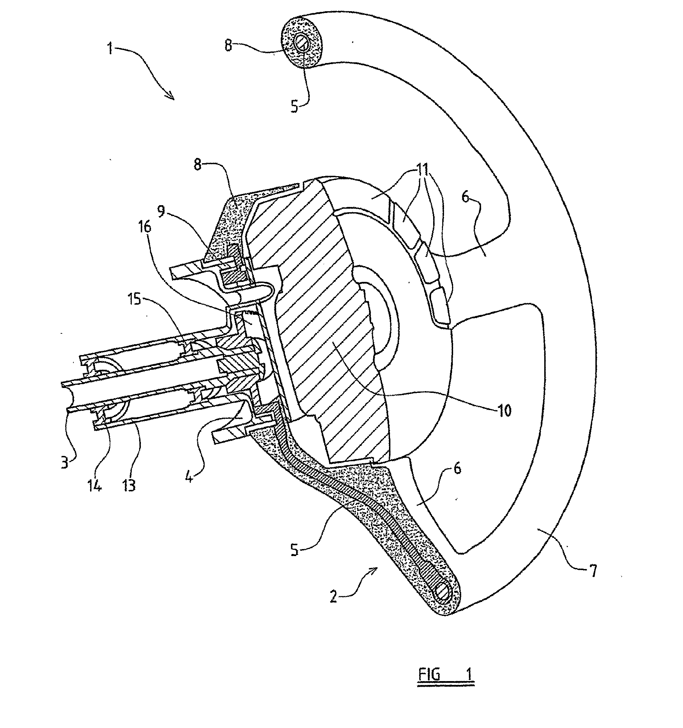

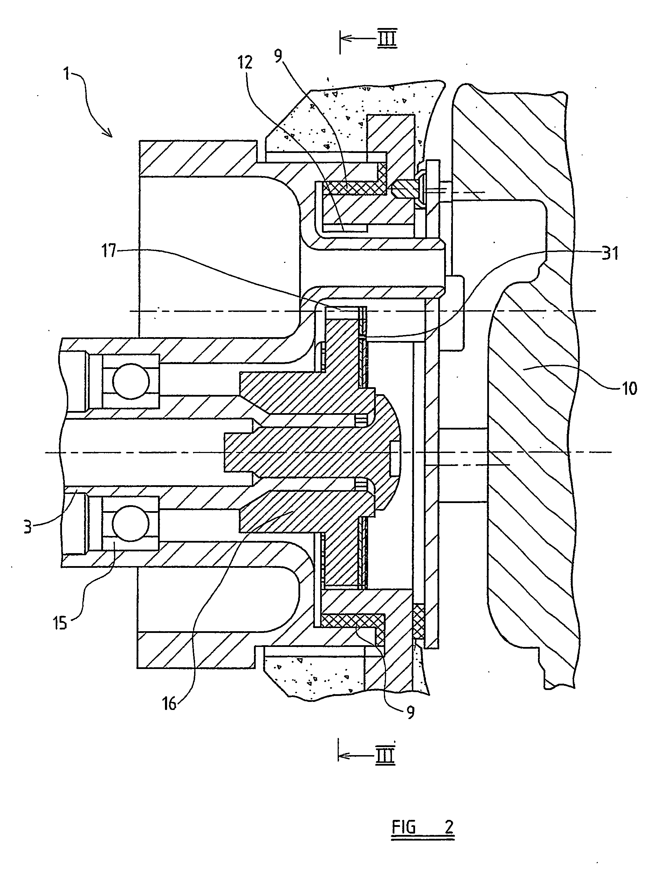

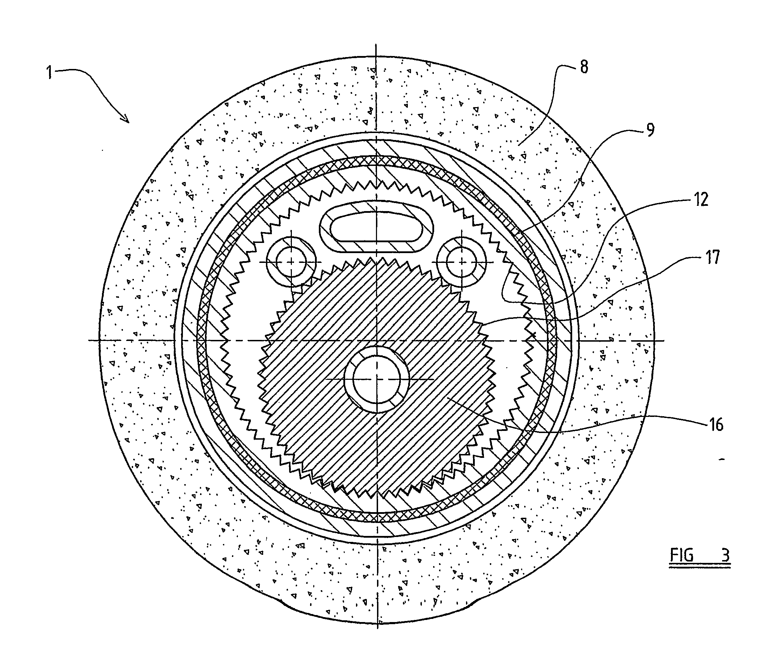

Referring initially to Figures 1 to 3 of the accompanying drawings, a steering-wheel assembly 1 is illustrated which incorporates a steering-wheel 2 which is mounted on a steering column 3. A fixed housing 4 is provided which is securely mounted in position.

The steering wheel 3 incorporates a metal frame 5 which defines spokes such as the spokes 6, and a peripheral rim 7. The frame 5 is covered with an appropriate outer covering 8, for example, of a foam material.

The frame 5 is mounted by means of an annular bearing 9 on an appropriate formation provided on the housing 4. The steering-wheel is to rotate about a predetermined axis. An air-bag unit 10 may be provided, which is connected directly to the fixed element 4. The air-bag unit 10 will thus not rotate on rotation of the steering wheel. The air-bag unit may be provided with a plurality of operating buttons 11 or the like, which will be fixed in position.

Part of the frame 5 adjacent the annular bearing 9 defines an inwardly-facing gear 12.

The steering column 3 is mounted within a tubular projection 13 which extends downwardly from the rest of the fixed housing 4 by means of two spaced-apart bearings, 14, 15 (see Figure 1). The uppermost end of the steering column carries a pinion 16, the pinion having a toothed periphery 17 which engages with the ring gear 12 provided on the steering wheel frame.

It will be understood that on rotation of the steering-wheel, the pinion 16 will rotate, thus rotating the steering column. A steering-wheel assembly of this general type has been proposed before, and is described in EP-A-1199243.

It is to be observed that in the prior proposed arrangement described above, the bearings 14,15 between the fixed housing 4 and the steering column 3 are offset from the bearing 9 between the fixed housing and the steering wheel frames. This offset of bearings can provide some degree of "play" or amplify any "play" that may be present, which is undesirable. It has been proposed, therefore, to provide an arrangement in which the bearings are coplanar or substantially coplanar in their relative positioning. If an arrangement of this type is utilised it may be found to be difficult to mount the bearings in position.

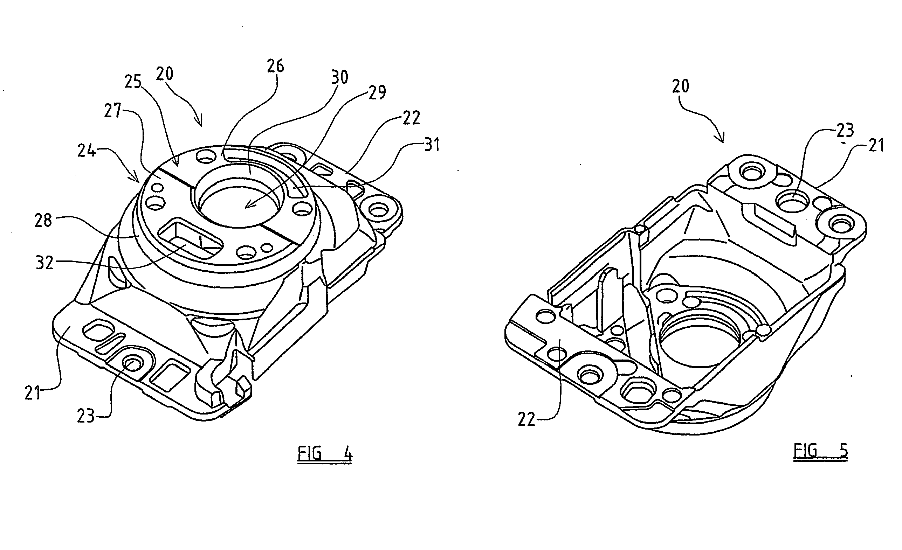

However, referring now to Figs 4 to 6, which illustrate a fixed element for mounting a steering wheel, which embodies the invention, an arrangement has been devised in which the bearings are coplanar, but yet the bearings can readily be mounted in position.

Referring initially to Figs. 4 and 5, a fixed element 20 is provided. The fixed element 20 has a rectangular base presenting two oppositely directed mounting flanges 21, 22. Each mounting flange is provided with appropriate mounting apertures 23, to enable the fixed element 20 to be fixed in position. The mounting flanges 21,22 support an upwardly directed hollow housing 24. The housing 24, because of its intended location, has a relatively complex external form, but the form of the housing is not relevant to the present invention. The upper part of the housing 24 presents an upper surface 25. The upper surface 25 is divided into two arcuate regions 26, 27 each of substantially semicircular extent. The upper surface 25 thus has a substantially circular exterior side wall 28. As will become clear from the following description, the side wall 28 accommodates part of a bearing.

A circular opening 29 is formed in the upper surface 25 of the housing, the opening 29 having an inwardly directed annular wall 30. The wall 30, as will become clear from the following description, forms a seat for a bearing.

The opening 29 is offset from the centre of the circular upper surface 25.

An arcuate aperture 31 is provided which extends through the arcuate region 26 of upper surface 25 at the top of the annular wall 30 of the opening 29, at a point where the annular wall 30 of the opening 29 is very close to the side wall 28 of the exterior part of the circular upper surface. The aperture 31 extends from almost the top of the outer side wall 28 to almost the top of the annular wall 30 of the aperture.

A further aperture 32 of rectangular form is provided which is located between the opening 29 and the side wall 28 at the point where the side wall 28 is located furthest from the opening 29.

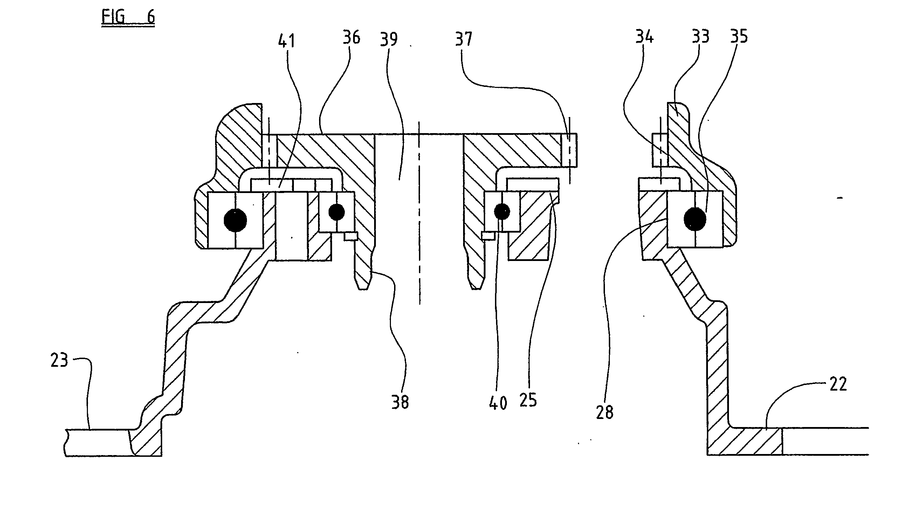

Turning now to Fig. 6, part 33 of a steering wheel frame is illustrated. The part 33 is of annular form and defines, on its inner face, a ring gear 34. Beneath the ring gear 34 the annular part of the steering wheel frame 33 is supported on an annular ring bearing 35. The annular ring bearing 35 is mounted on the outer side wall 28, around the upper surface 25 of the housing.

A pinion 36 is provided. The pinion 36 has a toothed exterior 37. The toothed exterior 37 of the pinion 36 engages the toothed ring gear 34 provided on the annular part of the steering wheel frame 32. The pinion 36 is provided with a hollow mounting shaft 38 the interior of which is splined 39. The pinion is mounted by means of an annular bearing 40, the annular bearing 40 engaging the exterior of the mounting shaft 38 and also being received within the opening 29. The annular bearing 40 thus engages the side wall 30 of the opening 29.

It will therefore be clear that when both of the ring bearings 35, 40 are in position, they lie substantially co-planar with one another.

A securing plate 41 is provided which extends over the bearings to retain the bearings in position. Of course, a further engagement will be provided on the steering wheel frame to engage the bearing 35, but this is not shown for the sake of simplicity of illustration.

It is to be noted, therefore, that an annular bearing 35 is mounted on the exterior wall 28 of the upper part of the housing 24, and a further annular bearing 40 is accommodated within the opening 29.

It is to be understood that the arcuate opening 31, and also, to a lesser extent, the rectangular opening 32, provided in the upper part of the housing 24, provide a certain degree of resilience or "yield" to the inner side wall 30 of the opening 29 and also to the outer wall 28 of the upper part 25 of the housing. This resilience or yieldability of the side walls facilitates the insertion of the bearing 40 in the opening 29 and the mounting of the bearing 35 on the exterior of the top part of the housing 24. If the openings 31,32 were not provided, there would be no "yield" in the side wall 30 of the opening 29 or in the outer wall 28 of the upper part 25 of the housing 24, which would make it very difficult, if not impossible, to mount the annular bearings 35,40 in the desired position.

Consequently, because the openings or apertures 31,32 are present in the upper surface 25 which is orthogonal to the side walls 28, 30, at points adjacent the respective side walls, the walls on which the bearings 35,40 have to be mounted have an appropriate degree of "give" or "yield".

It should also be appreciated that because neither of the side walls 28, 30, which are to receive the respective annular bearings 35,40, is provided with an outwardly projected flange, the "give" or "yield" of each side wall is also improved.

When used in this specification and claims, the terms "comprises" and "comprising" and variations thereof mean that the specified features, steps or integers are included. The terms are not to be interpreted to exclude the presence of other features, steps or components.

## Claims

1. A steering wheel arrangement, the steering arrangement incorporating a fixed element (20), the fixed element having an exterior side wall (28) on which is mounted a ring bearing (35), the ring bearing engaging part of the frame (5) of a steering wheel (2) so that the steering wheel (2) is rotatably mounted relative to the fixed element, wherein the fixed element also has an opening (29) defining a side wall, the opening receiving a second bearing (40) to be mounted adjacent the side wall (30), the second bearing receiving a component to be connected to part of a steering column (3), so that the steering column may rotate relative to the fixed element, the said side walls being yieldable or deformable to facilitate the positioning of the bearings, **characterised in that** each side wall (28,30) is made yieldable by the presence of an aperture (31) provided in a surface (25) which is orthogonal to the wall (28,30) at a point adjacent the wall (28,30).

2. An arrangement according to Claim 1 in wherein the two bearings (35,40) are substantially coplanar.

3. An arrangement according to Claim 1 or claim 2 wherein said aperture (31) is an arcuate aperture located at a point where the side wall (30) of the opening (29) is adjacent the exterior side wall (28).

4. An arrangement according to Claim 3 wherein a further aperture (32) is provided in a surface (23) orthogonal to the side walls (28,30) at a point where the side wall (30) of the opening (29) is spaced furthest from the side wall (28) of the exterior of the element.

5. An arrangement according to any one of the preceding claims wherein part of the steering wheel frame (5) carries a ring gear (12) and the said element which is to be connected to part of the steering column is a pinion gear (16) engageable with the ring gear.

## Patentansprüche

1. Lenkradanordnung, wobei die Lenkradanordnung ein festes Element (20) enthält, wobei das feste Element eine äußere Seitenwand (28) aufweist, an der ein Ringlager (35) montiert ist, wobei das Ringlager einen Teil des Rahmens (5) eines Lenkrades (2) so in Eingriff nimmt, dass das Lenkrad (2) relativ zu dem festen Element drehbar montiert ist, wobei das feste Element des Weiteren eine Öffnung (29) aufweist, die eine Seitenwand definiert, wobei die Öffnung ein zweites Lager (40) aufnimmt, das neben der Seitenwand (30) montiert werden soll, wobei das zweite Lager eine Komponente aufnimmt, die mit einem Teil einer Lenksäule (3) verbunden werden soll, dergestalt, dass sich die Lenksäule relativ zu dem festen Element drehen kann, wobei die Seitenwände nachgeben oder sich verformen können, um die Positionierung der Lager zu vereinfachen, **dadurch gekennzeichnet, dass** jede Seitenwand (28, 30) durch das Vorhandensein einer Öffnung (31), die in einer Fläche (25) angeordnet ist, die orthogonal zu der Wand (28, 30) an einem Punkt neben der Wand (28, 30) angeordnet ist, nachgiebig gemacht ist.

2. Anordnung nach Anspruch 1, wobei die beiden Lager (35, 40) im Wesentlichen in derselben Ebene liegen.

3. Anordnung nach Anspruch 1 oder Anspruch 2, wobei die Öffnung (31) eine bogenförmige Öffnung ist, die an einem Punkt angeordnet ist, wo sich die Seitenwand (30) der Öffnung (29) neben der äußeren Seitenwand (28) befindet.

4. Anordnung nach Anspruch 3, wobei eine weitere Öffnung (32) in einer Fläche (23) orthogonal zu den Seitenwänden (28, 30) an einem Punkt angeordnet ist, wo die Seitenwand (30) der Öffnung (29) am weitesten von der Seitenwand (28) der Außenseite des Elements beabstandet ist.

5. Anordnung nach einem der vorangehenden Ansprüche, wobei ein Teil des Lenkradrahmens (5) einen Zahnkranz '(12) trägt und das Element, das mit einem Teil der Lenksäule verbunden werden soll, ein Ritzel (16) ist, das mit dem Zahnkranz in Eingriff gebracht werden kann.

## Revendications

1. Dispositif de volant de direction, le dispositif de direction intégrant un élément fixe (20), l'élément fixe comprenant une paroi latérale extérieure (28) sur laquelle est monté un roulement (35), le roulement étant en contact avec une partie de l'armature (5) d'un volant (2) de direction de sorte que le volant (2) de direction est monté de façon pivotante par rapport à l'élément fixe, l'élément fixe présentant également une ouverture (29) définissant une paroi latérale, l'ouverture logeant un deuxième roulement (40) destiné à être monté contre la paroi latérale (30), le deuxième roulement logeant un composant destiné à être relié à une partie d'une colonne (3) de direction, de telle sorte que la colonne de direction puisse tourner par rapport à l'élément fixe, lesdites parois latérales pouvant fléchir ou se déformer pour faciliter le positionnement des roulements, **caractérisé en ce que** chaque paroi latérale (28, 30) est rendue flexible par la présence d'un orifice (31) pratiqué dans une surface (25) orthogonale à la paroi (28, 30) en un point voisin de la paroi (28, 30).

2. Dispositif selon la revendication 1, les deux roulements (35, 40) étant sensiblement coplanaires.

3. Dispositif selon la revendication 1 ou la revendication 2, ledit orifice (31) étant un orifice incurvé situé en un point où la paroi latérale (30) de l'ouverture (29) est adjacente à la paroi latérale extérieure (28).

4. Dispositif selon la revendication 3, un orifice supplémentaire (32) étant pratiqué dans une surface (23) orthogonale aux parois latérales (28, 30) en un point où la paroi latérale (30) de l'ouverture (29) est la plus écartée de la paroi latérale (28) de l'extérieur de l'élément.

5. Dispositif selon l'une quelconque des revendications précédentes, une partie de l'armature (5) du volant de direction portant une couronne dentée (12) et ledit élément destiné à être relié à une partie de la colonne de direction étant un pignon (16) susceptible d'engrener avec la couronne dentée.
